# EUROPEAN PATENT APPLICATION

(11) **EP 4 125 015 A1**
(43) Date of publication of application: **01.02.2023**
(21) Application number: 21188276.6
(22) Date of filing: 28.07.2021
(51) Int. Cl.: G06Q 10/08

(54) **MANAGEMENT SYSTEM FOR GOODS PICKING AND PACKING**

(71) Applicant: Dataconsult Spolka Akcyjna, 30-443 Krakow (PL)
(72) Inventor: Skindzier, Piotr, 30-833 Krakow (PL); Lobaziewicz, Monika, 20-058 Lublin (PL); Mierzwa, Rafal, 30-798 Krakow (PL); Raczek, Robert, 38-480 Sieniawa (PL); Bukowiec, Pawel, 30-798 Krakow (PL); Beres, Radoslaw, 36-043 Straszydle (PL); Sledziona, Maciej, 30-394 Krakow (PL); Architekt, Zbigniew, 28-133 Pacanow (PL); Figlewicz, Andrzej, 32-410 Dobczyce (PL)
(74) Representative: Kondrat, Mariusz

(57) **Abstract**

The subject of the invention is a management system for picking and packing goods, equipped with artificial intelligence, characteristic in that it consists of: (a) at least one packing station configured to pack goods, in accordance with the guidelines of the bin-pack module, equipped with a work table and a cobot (1) and a user component in the form of augmented reality glasses (AR) constituting the system interface and equipped with a visual process implementation module containing executable instructions in the scope of the assigned packing process path, where successive steps of the process are adjusted interactively depending on the feedback provided to the system by the operator, where the cobot (1) is a robotic arm (2) equipped with a power source, terminated with a replaceable gripper (3) and mounted on a supporting structure, which consists of a trolley (4) that is the base of the cobot and equipped with a work table (5), under which the first box (6) containing the cobot (1) driver and the vision controller are located, mounted above the work table (5) is a second box (7) containing cobot (1) electrical components, attached to the top of which is a robotic arm (2) terminated with a replaceable gripper (3) equipped with a camera mount (8), on which a camera with an illuminator for visual identification of packed objects is mounted; the gripper (3) is secured to the socket of the robotic arm end (2) by a quick coupling (9) with a release tab (10); (b) a 3D scanner; (c) a server component containing a database with business data from the warehouse management system; (d) dedicated application; (e) a memory and a processor capable of executing instructions stored in said memory, said memory containing executable instructions for managing the goods picking and packing process; (f) a data exchange module; (g) a control module; (h) at least one pick-by-light cabinet; (i) a two-stage decision-making mechanism of the packaging strategy consisting of the intelligent task allocation module and the Bin-Pack module, where the intelligent task allocation module is equipped with artificial intelligence, which based on data containing: information about the operator present at the packing station, the operator's work history and the method of packing implementation for selected tasks, specifies packaging parameters such as the percentage filling of the package, the maximum load capacity of the package, time to the end of packing, and on the basis of this data, decides on the sequence of the packing order, and sends the thus prepared data to the Bin-Pack Module, where the Bin-Pack module is based on artificial intelligence and contains approximation algorithms, which, after activation, sequentially calculate the number of packages to be packed, determine the sequence of goods handling and the position of placing goods in the package, calculate the packing tasks, and then classify the solutions and send them to the control module and the data exchange module.

## Description

The subject of the invention is a management system for goods picking and packing.

For years, the logistics of goods packaging has been struggling with the complex problem of fast and optimal planning of goods packing methods versus the assumed plan. The state of the art knows systems optimizing supply chain management.

The European EP3414714 A1 patent describes a computer device integrated with an automatic warehouse mechanism for managing product distribution in the supply chain. The disclosed device comprises memory containing executable instructions and information regarding supply chain demand, product data, warehouse box data, the processor executing said instructions, the first input interface allowing an external device to communicate with the computer device, and the second input interface capable of outputting information from the processor. In turn, processor-executable instructions contain a component of historical demand data for products in the supply chain and the dimensions of products, as well as containers and vessels for shipping products; a preliminary processing element configured to define multiple configurations of the system for packing products into containers; optimization model using mixed integer linear programming solver and configured to use historical demand data and shipping optimization cost and dimensions data.

The European EP3575246 A1 patent describes the system and method of article-handling for order fulfillment. In that, the disclosed system comprises: one or more pick-and-pack clusters; an overhead conveyor system which includes a network of overhead conveyors, for conveying pouches; a floor-bound conveyor system, which includes a network of floor-bound conveyors for conveying storage units holding articles; and a central control unit. The method of operation of the said article-handling system comprises: generating a packing pattern for the order defining the packing sequence; assigning one or more merge-and-pack stations to the order; analyzing the order with regard to pouchable and non-pouchable articles, wherein each of the pouchable articles is sized and heavy such that it fits or doesn't fit into one of the pouches; retrieving corresponding storage units which contain the pouchable articles associated with the order, delivering the retrieved storage units to one or more of the pick stations, and loading the pouchable articles from the delivered storage units into one or more of the pouches at one or more pick stations; transporting loaded pouches from one or more pick stations to the assigned merge-and-pack station; transporting corresponding storage units, which contain the non-pouchable articles associated with the order to the assigned merge-and-pack station.

In turn, US patent US 10489739 B2 discloses a method and system for automating the shipping of a first physical object associated with a first user. Embodiments of the shipping automation system and method for a physical object may include an object dimension meter (ODM) operating to collect and wirelessly transmit a dimension data set for a physical object, an object weight meter (OWM) capable of collecting and transferring data wirelessly, a weight data set for the physical object and shipping automation system capable of receiving data sets from ODM and OWM, implementing a compliance rule to facilitate the standardization of requirements for service levels provided by delivery carriers, specifying object characteristics for a physical object, defining object characteristics specifications required by service levels and determining the service level for the physical object based on the characteristics of the object and the specification of the object characteristics, as well as the classification of the objects based on the classification model, which is a neural network model and where the classification of the second physical object includes the input of an image dataset and the second normalized characteristics of the object to the neural input layer of the neural network model.

In turn, the European patent EP3343490 A1 describes systems, methods, and computer readable media which can obtain image data from a camera view associated with a computing device, where the image data is associated with an interior space. The method disclosed includes obtaining, by the computing system, image data from a camera view associated with the computing device, image data associated with the interior space; the computing system determining a portion of the image data to display one or more augmented reality (AR) content items; the computing system determining the AR content item to be displayed in the camera view; and the computing system providing the AR content item to be presented in the camera view based on the predetermined portion of the image data. Preferably, the method further comprises provision of a three-dimensional (3D) interior space map based on simultaneous localization and mapping (SLAM) and includes mapping of image data to a 3D interior space map to determine one or more locations or directions of a user associated with the camera view in the 3D Map where the camera view shows the user's perspective. Preferably, the method further comprises provision of information in response to a gesture associated with the AR content item.

However, known solutions do not meet the current needs of a rapidly changing market, as they are not able to take into account a large amount of data with a high degree of complexity. The large amount and complexity of data results from the heterogeneity of goods to be packed, dynamically changing product lines, variety of sizes and shapes, and time constraints for the process control system. It is dictated by the requirements of the market and customers who expect the shortest possible delivery times for orders that are diversified in terms of product lines. It is also important that the specification of orders is often changed at the last minute and then the order picking must be changed immediately. Another issue is the optimization of packing costs. It turns out that the optimal use of the internal space of a given package, contrary to appearances, generates considerable costs, which is very important for companies in the warehouse logistics industry.

The aim of the invention is to provide a new goods packing management system that allows for quick and optimal planning of the goods packing method in relation to the assumed plan.

The essence of the invention is a management system for picking and packing goods, equipped with artificial intelligence, characterised in that it consists of:
(a) at least one packing station configured to pack goods, in accordance with the guidelines of the bin-pack module, equipped with a work table and a cobot and a user component in the form of augmented reality glasses (AR) constituting the system interface and equipped with a visual process implementation module containing executable instructions in the scope of the assigned packing process path, where successive steps of the process are adjusted interactively depending on the feedback provided to the system by the operator, where the cobot is a robotic arm equipped with a power source, terminated with a replaceable gripper and mounted on a supporting structure, which consists of a trolley that is the base of the cobot and equipped with a work table, under which the first box containing the cobot driver and the vision controller are located, mounted above the work table is a second box containing cobot electrical components, attached to the top of which is a robotic arm terminated with a replaceable gripper equipped with a camera mount, on which a camera with an illuminator for visual identification of packed objects is mounted; the gripper is secured to the socket of the robotic arm end by a quick coupling with a release tab;
(b) 3D scanner;
(c) a server component containing a database with business data from the warehouse management system;
(d) dedicated application;
(e) a memory and a processor capable of executing instructions stored in said memory, said memory containing executable instructions for managing the goods picking and packing process;
(f) data exchange module;
(g) control module;
(h) at least one pick-by-light cabinet
(i) a two-stage decision-making mechanism of the packaging strategy consisting of the intelligent task allocation module and the Bin-Pack module, where the intelligent task allocation module is equipped with artificial intelligence, which based on data containing: information about the operator present at the packing station, the operator's work history and the method of packing implementation for selected tasks, specifies packaging parameters such as the percentage filling of the package, the maximum load capacity of the package, time to the end of packing, and on the basis of this data, decides on the sequence of the packing order, and sends the thus prepared data to the Bin-Pack Module, where the Bin-Pack module is based on artificial intelligence and contains approximation algorithms, which, after activation, sequentially calculate the number of packages to be packed, determine the sequence of goods handling and the position of placing goods in the package, calculate the packing tasks, and then classify the solutions and send them to the control module and the data exchange module.

Preferably, at least one packing station is equipped with a mobile device selected from the group consisting of a tablet, laptop, smartphone or a combination thereof.

Preferably, the trolley is on wheels.

Preferably, the 3D scanner supports the .STL format and two other formats selected from the group consisting of: .ply; .X3D; Collada; .OBJ.

The present invention provides the following advantages:
- increases work efficiency of packing station operators;
- thanks to the work history of a given operator, it enables effective redistribution of human resources in accordance with the specific skills of a given employee;
- thanks to the matching of the package sizes and the product packing strategy to packages the efficiency of packing is increased with a simultaneous reasonable packing management;
- increased efficiency and reduction of the costs and time of packing goods;
- dynamic algorithms of the system according to the invention processing, in real time, large amounts of data and allowing for quick and optimal re-planning of the goods packing method in relation to the assumed plan;
- the system according to the invention enables dynamic modification of the packing station load using SI solutions;
- AR (augmented reality) glasses included in the user component provide the operator at the packing station with the ability to work hands-free, improve his work ergonomics.

The invention is illustrated in the drawing in which embodiment examples are shown, in which Fig. 1 shows a flow chart of the cobot forming part of the packing station according to the invention; Fig. 2 shows a flow chart of the cobot arm portion forming part of the packing station according to the invention; Fig. 3 shows a flow chart of management of the goods packing process by the system according to the invention; Fig. 4 shows a flow chart of the architecture of the data exchange module of the system according to the invention.

### Embodiment 1.

The system according to the invention is the management system for picking and packing goods, equipped with artificial intelligence.

Each of the goods to be packed may be described by a different set of features processed by the system according to the invention, and each feature may have a different unit or belong to a class of dimensionless features. The system will process the decision problem defined in this way - who to allocate packing to, and the optimization problem - how to most effectively pack a selected set of stocks of picked goods, will contain estimated nk variables where, n - number of available features for goods, k - number of available feature units or dimensionless values.

The system according to the invention consists of the following components:
*(a) one or more packing stations configured to pack goods in accordance with the guidelines of the bin-pack module,*
*(b) 3D scanner;*
*(c) a server component containing a database with business data from the warehouse management system;*
*(d) dedicated application;*
*(e) a memory and a processor capable of executing instructions stored in said memory, said memory containing executable instructions for managing the goods picking and packing process;*
*(f) data exchange module;*
*(g) control module;*
*(h) at least one pick-by-light cabinet*
*(i) two-step packing strategy decision-making mechanism.*

The number of packing stations may vary depending on the needs of the enterprise, but in the minimum variant, at least one packing station is required. One operator works at any given time at each packing station.

Each packing station is equipped with a work table and a cobot 1 and a user component in the form of augmented reality glasses (AR) which is an interface of the system according to the invention. Said AR glasses are equipped with a visual process execution module containing executable instructions within the requested packing process path, where successive steps of the process are adjusted interactively depending on the feedback provided to the system by the operator.

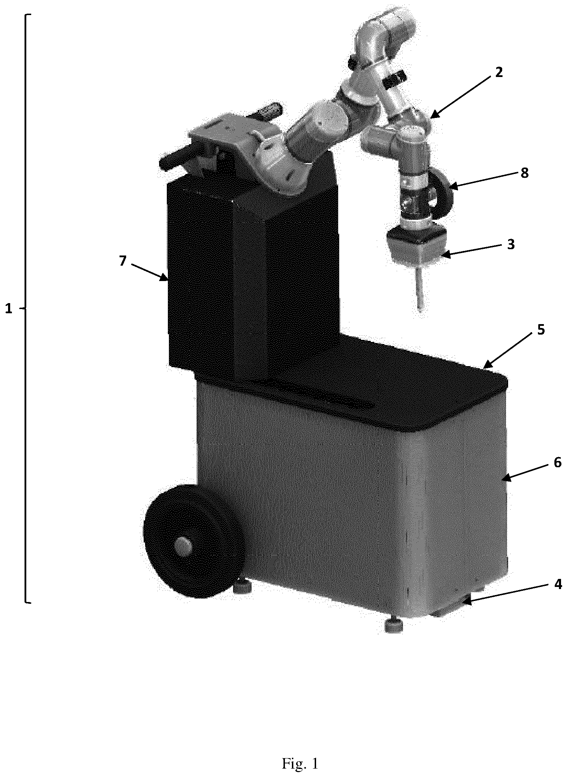

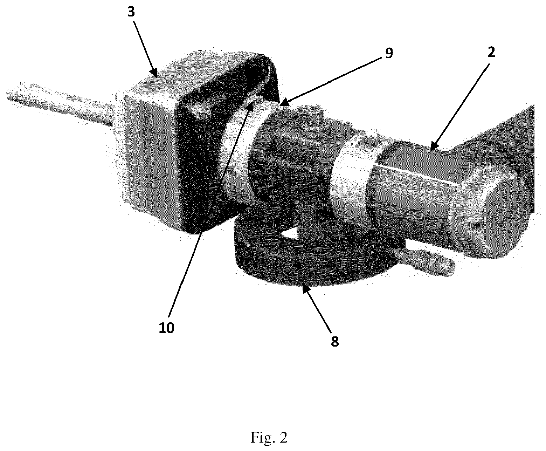

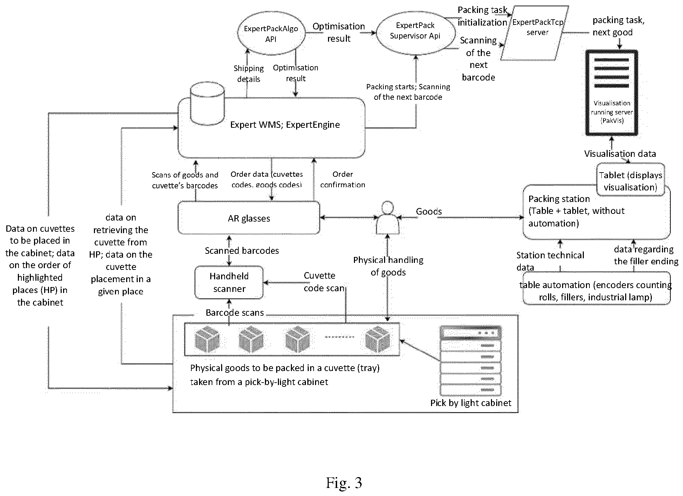

The cobot **1** itself is shown in the flow chart in Fig. 1 and Fig. 2. Fig. 3 shows a flow chart of managing the process of packing goods by the system according to the invention.

As shown in Fig. 1, the cobot **1** is a robotic arm **2** equipped with a power source, terminated with a replaceable gripper **3** and mounted on a support structure.

Said support structure consists of a trolley **4** equipped with wheels and forming the base of the cobot **1**, which trolley **4** is equipped with a work table **5** under which the first box **6** containing the cobot **1** controller and a vision controller are located. In turn, above the work table **5**, the second box **7** is mounted, containing electrical components of the cobot **1**, attached to the top of which is a robotic arm **2** terminated with a replaceable gripper **3** and equipped with a camera mount **8**, on which a camera with an illuminator for visual identification of packed objects is mounted.

Visual identification at the packing station in the system according to the invention is performed using a camera with an illuminator mounted on the cobot **1**. Identification itself of a single object in the tray at the packing station and indication of the position from which the cobot **1** is to pick up goods is performed by the vision controller. After delivering the goods, the operator (i.e. a human worker) performs a quick check of the goods before placing the goods in the shipping box, e.g. checking whether the box containing the goods is sufficiently rigid.

Provided that, in this unlimited embodiment, the robotic arm **2** of the cobot **1** itself is capable of checking the weight of each object being lifted. Weighing functionality causes at least a 0.5s delay in moving the object.

As indicated in Fig. 2, the gripper **3** is fixed in the socket at the end of the robotic arm **2** by means of a quick coupling **9** with a release tab **10**.

The quick coupling **9** enables efficient and quick replacement of the gripper **3**. In order to replace the gripper **3**, the release tab **10** needs to be pressed, which will release the gripper **3**. To install the gripper **3** again, it must be placed in the socket of the arm **2** and pressed manually until it clicks.

In this embodiment, the cobot **1** is equipped with two types of interchangeable grippers 3 that can be used interchangeably:
- Type 1: RG2 gripper, equipped with two "fingers" gripping the element;
- Type 2: VGC10 vacuum gripper (shown in Fig. 1).

However, in this non-limiting embodiment, the cobot **1** at the packing station of the system according to the invention is a collaborative robot with a payload of up to 3 kg, equipped with a gripper **3** and a camera, both of which are intended for finding and retrieving items with the correct barcode.

Cobot **1** is powered by 230V AC single-phase alternating voltage. Both the second box **7** and the arm **2** are powered by this voltage. The power is turned on after turning the switch located on the rear casing of the first box **6** containing the cobot **1** controller. The said controller, the vision controller, the camera and the illuminator are powered by 24V DC.

The cobot **1** control system is based on a Siemens SIMATIC S7 1211C programmable controller (PLC) located in the first box **6**, which communicates with the camera controller and the cobot **1** arm **2**. A TCP connection has been designed with the controller, enabling the transfer of values from external devices in order to exchange the barcode between devices. The PLC, using the TCP protocol, communicates with the vision controller, sending appropriate control commands, and by using the PROFINET protocol, it connects to the arm **2**. The vision controller and the arm **2** communicate using the TCP protocol. Most of the control logic is performed at the PLC level. Commands responsible for starting and stopping the cobot **1** program are issued by the PLC via the communication protocol.

The 3D scanner is designed to map the shape of a real object through a set of points describing its surfaces. As a result, we obtain a point cloud with the coordinates X, Y, Z describing the scanned object and optionally the color of the surface of this object. The raw data from each measurement is a point cloud, although some manufacturers propose scanners that immediately generate a grid spread over these points. The grid model is now a frequently used format in industrial and visualization applications. Raw data (point clouds) is used for documentation or quality control of scanned objects due to smaller distortions. The scanned parameters are transferred by the data exchange module to further system modules, including the server component.

Provided that the 3D scanner used in the system according to the invention supports the ".STL" format and two other formats selected from the group consisting of: .ply; .X3D; Collada; .OBJ.

In this non-limiting embodiment, the supported formats are .STL, .X3D, and .OBJ.

Provided that the ".STL" (STereoLithography or Standard Tessellation Language) format is the most popular spatial model format, the name of which is derived from stereolithography-dedicated software
- a technology developed by 3D Systems in the early 1980s. Files in this format are supported by many types of spatial design software, most often being used in rapid prototyping and computer aided manufacturing. Currently, the vast majority of 3D design programs have the ability to save models in this format. The object geometry is presented as a grid of triangles placed in a standard Cartesian coordinate system, without mapping color or texture. As a result, files in the .stl format can be successfully presented in the form of a G-Code interpreted by a 3D printer.

The ".ply" extension developed by scientists from Stanford University, which correctly generates a model from the data collected by the 3D scanner. Files in this format can be used as a substitute for .stl.

The ".X3D" format is a free IOS standard, which is characterized by the ability to store a large amount of information related to 3D graphics. It is used, among others, by companies providing 3D printing services.

Then, Collada (Collaborative Design Activity) is a format in which files can be transferred between different programs. Data in this format is readable by many interactive 3D applications.

The ".OBJ" format is a format used only for the geometric interpretation of the model, determined by the position of the vertices in a fixed coordinate system. It is commonly used in 3D modeling programs, which makes it possible to transfer the model without damage.

The system also includes a component with memory and a processor capable of executing instructions stored in said memory, said memory containing executable instructions for managing the goods picking and packing process.

Another element is a server component containing a database with business data from the management system according to the invention, data on goods being packed, parameters of goods being packed, data of operators, data on the work of operators, etc. All data from the system according to the invention is archived on the server. In addition, the server provides computing power for the operation of the algorithms of the two-stage packing strategy decision-making mechanism and the control module.

The server is connected to cobot **1** and other system modules with which it communicates via the data exchange module. The server structure is divided into the packing server and the cobot server.

Cobot **1** accepts messages only from the LAN network it has created, therefore, to ensure simultaneous communication between cobot **1** and the rest of the system, it is necessary that the server connected directly to cobot **1** have at least two network cards (one card intended for connection with an Ethernet cable with a cobot, the other network card designed for communication with other modules of the ExpertPack system). In this embodiment, a laptop with 2 network cards was used as a server: one card supporting RJ-45 cable, the other one supporting WiFI. The operator can log into the system through the AR glasses constituting the interface.

On the other hand, logging into the system can take place via an application implemented on a mobile device (e.g. laptop, tablet or smartphone). This type of login can be used, for example, by a work supervisor who is not an operator.

The data exchange module is responsible for communication among other system components, i.e. AR glasses, Cobot **1**, server, control module, intelligent task allocation module and the Bin-Pack module. Therefore, it consists of many components - communication API, and in this respect its goal is to optimize communication and ensure its accuracy and reliability.

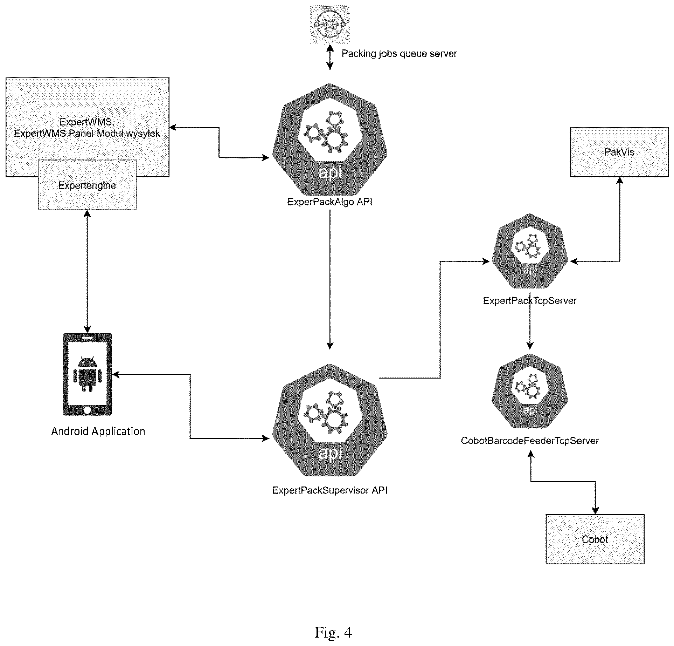

The architecture of the data exchange module in the system variant equipped with an additional mobile device in the form of a smartphone with an Android application is shown in Fig. 4.

As shown in Fig. 4, the data exchange module consists of the following elements:
- ExpertWMS Module
- EspertPackAlgoAPI Module
- ExpertPackSupervisorAPI Module
- ExpertPack TCP Sever Module
- PakVis Module
- CobotBarcodeFeeder TCP Sever Module

The ExpertWMS module is responsible for communication with the Android application of the mobile device and provides the functionality of user logging into the system according to the invention, access to packing processes from the processes menu and configuration of available processes, such as e.g. packing or package dimensioning. Provided that the configuration and access to the packing process through the application includes access to data and configuration of parameters including: barcodes of documents and goods, document approval, list of documents to be processed, list of goods/items to be scanned, messages about errors in process execution (e.g. invalid scans). On the other hand, the configuration and access to the package dimensioning process through the application includes access to data and configuration of parameters including: product barcode, document approval, data (x, y, z) read from the dimensioning device (i.e. 3D scanner), messages about unexpected errors during reading attempts.

The ExpertWMS module provides shipping data to the EspertPackAlgoAPI module, which, on that basis, returns to GUID the packing tasks and the result of the optimization task (used shipping media and additional items of specific goods in packages).

Next, the EspertPackAlgoAPI module transfers the result of the optimization task (used shipping media and additional items of specific goods in packages, as a data model dedicated to PakVis) to the ExpertPackSupervisor API module, which cooperates with the Expert WMS module and the ExperPack TCP server module. Where the ExpertWMS module sends GUID and the request to start a task in a supervised manner and GUID and the scanned barcode data to the ExpertPackSupervisorAPI module, which in response sends confirmation that the correct barcode has been scanned or information about an incorrect scan and the code that should be scanned.

Next, the ExpertPackSupervisor API module sends to the ExpertPack TCP server module the data about starting a new packing task together with packing data, as well as data about scanning the next barcode in the currently performed task, which forwards it to the PakVis module. The PakVis module in response sends back to the ExpertPack TCP server module the visualizer identifier used to link the appropriate visualizer instance to a specific packing task. At the same time, the ExpertPack TCP server sends the data of the scanned barcode to the CobotBarcodeFeeder TCP server module used for communication with cobot **1**, which sends back a feedback from cobot **1** whether or not the goods were successfully picked and whether the vision system found the goods.

The control module consists of two components, a component related to the Cobot and its data processing server, and a component mounted on the pick-by-light cabinet (Fig. 3). Via the data exchange module, the cobot is informed about the tray which was picked for packing from the pick-by-light cabinet. In the other direction, after packing all the goods from the tray, the information from the cobot goes to the cabinet to indicate the next tray to be packed - the system illuminates the next tray to be picked from the cabinet with a LED strip.

On the other hand, the two-stage decision-making mechanism of the packing strategy consists of the intelligent task allocation module and the Bin-Pack module, where the intelligent task allocation module is equipped with artificial intelligence, which based on the data containing: information about the operator present at the packing station, the operator's work history and the method of packing for selected tasks, specifies packing parameters such as the package filling percentage, the maximum load capacity of the package, time to the end of packing, and on the basis of this data, decides on the sequence of the packing instruction, and sends the thus prepared data to the Bin-Pack Module.

In turn, the Bin-Pack module is based on artificial intelligence and contains approximation algorithms which, after activation, sequentially calculate the number of packages to be packed, determine the sequence of goods handling and the position of placing goods in the package, calculate packing tasks, and then classify the solutions and send them to the control module and the data exchange module.

The Bin-Pack module contains a set of bin-packing class algorithms, for which it will calculate the packing task, classify the solutions and send them to other modules such as the Data Exchange Module, the Control Module in order to send the result to other system components and to the Intelligent Task Allocation Module.

In this embodiment, the Bin-Pack Module approximation algorithm makes it possible in turn:
- to calculate the number of packages to be packed,
- to determine the sequence of picking goods, the position of placing goods in the package,
- to calculate the packing task,
- to classify the solution and to send it to other modules, such as: the Data Exchange Module, the Control Module in order to send the result to other system components and to the Intelligent Task Allocation Module.

On the other hand, the role of the intelligent task allocation module is to search for the optimal set of packing parameters for the Bin-Pack module and to select the optimal packing algorithm in the Bin-Pack module in order to achieve the desired packing results. For example, a queuing system based on the optimization of the number of movements or in the event of a problem with packing, items of different volumes must be packed in a finite number of packages, each with a volume of V, in a way that minimizes the number of packages used.

Ultimately, the intelligent task allocation module is to receive information about what operator (i.e. human-employee) is at the packing station of the system according to the invention from the data processing module. Thanks to the use of artificial intelligence solutions, e.g. evolution algorithms, neural networks, on the basis of the operator's work history, it specifies packing parameters such as the package filling percentage, the maximum load capacity of the package, time to the end of packing. On the basis of these data, it decides on the sequence of the packing request taken up. It transfers thus prepared data to the Bin-Pack module.

From the operator's component (i.e. AR glasses), the intelligent task allocation module receives information on how to perform packing for selected tasks and on this basis learns to better select packing requests for a specific operator and the time when he works, e.g. an hour before the end of a shift, it only assigns packing into one package to avoid the operator abandoning packing at the end of the shift.

The intelligent task allocation module allows for the allocation of work to the operator according to chosen criteria. This translates, first of all, into the optimal use of time and resources, quality improvement, and load control for individual packing stations.

The selection of criteria may be closely related to the specific environment in which the operator works. Depending on the requirements, the configuration may allow for a different impact of the components on the target task allocation, therefore, in order to solve this problem, a tool for criteria adjustment and development was created.

This mechanism permits introduction of individual criteria as the so-called task rules and their active configuration. Active configuration has the ability to activate and adjust elements whose output will affect selection of the task. The configuration is responsible for allocating tasks from a given range. Since there may be many configuration patterns, the algorithm will automatically allow the criteria for allocating tasks.

Configuration components have a direct impact on the value (rating) of the task and its assignment to the operator. Tasks with the highest ratings for the operator will be allocated first. In the context of the rule, there is an association with a group of operators to whom certain tasks can be assigned. Only currently active operators can handle tasks, inactive operators, even though they are assigned to the rule, cannot handle assigned tasks. The operator can be assigned to many such groups at any given moment.

Operator groups are used for general allocation to a form of work, which may result from constraints that cannot be supported by the task configuration (e.g., abandonment of execution by a specific operator). The assignment of operators can be divided into groups within which they are subject to different rules for work allocation.

During the work, tasks are monitored on an ongoing basis and their execution can be assigned to a specific working operator. Tasks can be broken down into several categories:
- Completed - these are operations performed by the operator,
- In progress - these are ongoing operations, the status of which is not yet finished,
- Assigned - these are operations that are awaiting execution by a given operator,
- Pending - these are operations that already have a designated purpose, but their allocation may be affected by the current situation,
- Not done ― these are operations that do not have enough information to be analyzed,
- Current work status ― takes place at positions that can also be monitored in the management panel. In addition, from this interface it is also possible to change the sequence of a specific task or to change its allocation. Only tasks other than "completed" or "in progress" can be subject to such changes. However, changes may apply to "assigned" and "pending" tasks.

Tasks to be executed are calculated by the periodic service of the intelligent task allocation module, based on the rules and conditions configured in them. The pool of tasks is then appropriately allocated to operators logging into the system. After the operator is logged out or the conditions are met for the operator's task group (e.g. end of working time), the allocated tasks are returned to the pool and are distributed among active operators.

The module of intelligent tasks allocation allows for complete automation of jobs distribution in the warehouse. Once the conditions for task execution are met, the task is added to the jobs pool, while distribution and queuing is handled by the configured rules. The role of the administrator is only to supervise. The mechanism also provides analytics that can be used to further optimize warehouse processes.

The module of intelligent task allocation in its algorithms is based on analyses that make it possible to identify effectiveness or feasibility of execution of a given task. The data is collected on, inter alia, operators' performance in the context of the process in which they work, the percentage of errors registered at subsequent stages, packing efficiency. Such data allows for dynamic determination of the operator's personal predispositions and automatic evaluation as well as redirection of the operator to a specific group of tasks in which he is most efficient and effective.

This embodiment presents an example of analytics performed by the system according to the invention, on the basis of which an operator can be assigned to a given group of processes in which he performs optimally.

The analysis in the example was carried out for three operators (marked from 1 to 3) in terms of three criteria including full-pallet, picking and mixed cargo. The pace of packing and the numbers of errors were assessed. The results are presented in Tables 1 and 2.

**Table 1. Average time of goods item packing by operator.**

| **Average time / item [s]** | **Operator 1** | **Operator 2** | **Operator 3** |
|---|---|---|---|
| Full-pallet | 456 | 410 | 495 |
| Picking | 360 | 398 | 373 |
| Mixed cargo | 306 | 210 | 255 |

**Table 2. Number of errors made by the operator**

| **Number of errors made / last 1,000 items** | **Operator 1** | **Operator 2** | **Operator 3** |
|---|---|---|---|
| Full-pallet | 0 | 0 | 0 |
| Picking | 1 | 2 | 2 |
| Mixed cargo | 5 | 1 | 1 |

The analysis showed that Operator 2 completes mixed cargo picking the fastest and makes few mistakes in the process. On that basis, the intelligent task allocation module can reassign operator 2 to mainly handle mixed cargo shipments, where his efficiency is the highest. On the other hand, Operator 1 does not particularly stand out in terms of duration of the picking process (slightly shorter than the others), but his error frequency in this area is the lowest. This can also be the basis for classifying operator 1 to a given area of operations by the intelligent task allocation module.

## Claims

1. A management system for picking and packing goods, equipped with artificial intelligence, **characterised in that** it consists of:
(a) at least one packing station configured to pack goods, in accordance with the guidelines of the bin-pack module, equipped with a work table and a cobot (1) and a user component in the form of augmented reality glasses (AR) constituting the system interface and equipped with a visual process implementation module containing executable instructions in the scope of the assigned packing process path, where successive steps of the process are adjusted interactively depending on the feedback provided to the system by the operator, where the cobot (1) is a robotic arm (2) equipped with a power source, terminated with a replaceable gripper (3) and mounted on a supporting structure, which consists of a trolley (4) that is the base of the cobot and equipped with a work table (5), under which the first box (6) containing the cobot (1) driver and the vision controller are located, mounted above the work table (5) is a second box (7) containing cobot (1) electrical components, attached to the top of which is a robotic arm (2) terminated with a replaceable gripper (3) equipped with a camera mount (8), on which a camera with an illuminator for visual identification of packed objects is mounted; the gripper (3) is secured to the socket of the robotic arm end (2) by a quick coupling (9) with a release tab (10);
(b) 3D scanner;
(c) a server component containing a database with business data from the warehouse management system;
(d) dedicated application;
(e) a memory and a processor capable of executing instructions stored in said memory, said memory containing executable instructions for managing the goods picking and packing process;
(f) data exchange module;
(g) control module;
(h) at least one pick-by-light cabinet;
(i) a two-stage decision-making mechanism of the packaging strategy consisting of the intelligent task allocation module and the Bin-Pack module, where the intelligent task allocation module is equipped with artificial intelligence, which based on data containing: information about the operator present at the packing station, the operator's work history and the method of packing implementation for selected tasks, specifies packaging parameters such as the percentage filling of the package, the maximum load capacity of the package, time to the end of packing, and on the basis of this data, decides on the sequence of the packing order, and sends the thus prepared data to the Bin-Pack Module, where the Bin-Pack module is based on artificial intelligence and contains approximation algorithms, which, after activation, sequentially calculate the number of packages to be packed, determine the sequence of goods handling and the position of placing goods in the package, calculate the packing tasks, and then classify the solutions and send them to the control module and the data exchange module.

2. The system according to claim 1 is **characterised in that** at least one packing station is equipped with a mobile device selected from the group consisting of a tablet, laptop, smartphone or a combination thereof.

3. The system according to claim 1 or 2 is **characterised in that** the trolley (4) is equipped with wheels.

4. The system according to any of the previous claims 1 through 3 is **characterised in that** the 3D scanner supports the .STL format and two other formats selected from the group consisting of: .ply; .X3D; Collada; .OBJ.
